# EUROPEAN PATENT APPLICATION

(11) **EP 1 911 978 A1**
(43) Date of publication of application: **16.04.2008**
(21) Application number: 07117893.3
(22) Date of filing: 04.10.2007
(51) Int. Cl.: F15B 11/16, A01B 63/10, B62D 5/07

(54) **System for distributing pressurized oil in a vehicle, in particular a farm tractor.**

(30) Priority: 12.10.2006 IT BO20060702
(71) Applicant: CNH Italia S.p.A., 41100 Modena (IT)
(72) Inventor: Sedoni, Enrico, 41100 Modena (IT); Vescovini, Maurizio, 41100 Modena (IT)
(74) Representative: CNH IP Department

(57) **Abstract**

A system (10) for distributing pressurized oil in a farm tractor; the system (10) having an oil distribution network (RT), and a pump assembly (PP) for pumping oil to at least one priority user device (12) to which a relative "main priority" is assigned, and to at least one secondary user device (AD1, AD2, AD3) to which a relative "secondary priority" is assigned. The system (10) is characterized by having a hydraulic logic device (16) by which to ensure, in any operating condition, that the priority user device (12) is always given priority over all the other secondary user devices (AD1, AD2, AD3), while at the same time maintaining a minimum pressure drop in all conditions in which the pump assembly (PP) is able to satisfy all the user devices.

## Description

The present invention relates to a system for distributing pressurized oil in a vehicle, in particular a farm tractor or an industrial vehicle, such as a construction equipment vehicle.

As is known in the art, systems for distributing high-pressure oil in farm tractors have to deliver oil to one or more hydraulic user devices. Hydraulic power is normally distributed to different user devices by means of a single-pump system. Consequently, the oil distribution system has to assign priorities to ensure adequate safety.

In other words, provision must be made to ensure that certain hydraulic devices are given priority over others in all operating conditions of the hydraulic system.

Consequently, in the event oil supply is demanded simultaneously by a "secondary priority" device (see below) and a "main priority" device (see below), as long as the oil distribution system is unable to supply both, supply to the secondary priority device must be shut off entirely (or partly), and the main priority device must be supplied completely.

A steering device or trailer hydraulic brake device are normally good examples of main priority devices.

The hydraulic power demanded, for example, by a lifting device (or other auxiliary devices) must therefore only be supplied by the oil distribution system if, and only if, there is enough hydraulic power to satisfy the main priority devices first.

"Priorities" are traditionally selected using so-called priority valves.

The technical problem lies in supplying hydraulic power to all the user devices (of "main priority" and "secondary priority") while reducing the hydraulic power losses caused by the so-called pressure heads (i.e. the minimum pressure levels) which are created when installing priority valves in a hydraulic circuit. Each pressure head is normally generated by a valve upstream of a main priority device.

In the known art, to simply raising a lifting device, as opposed to using a trailer hydraulic brake device, for example, the passive resistance of the (main priority) valve assigned to the trailer hydraulic brake device must still be overcome.

The present invention is an attempt to provide a hydraulic system designed to minimize pressure losses.

In other words, the main object of the present invention is to minimize power losses in a tractor hydraulic circuit by employing hydraulic logic devices for assigning priorities to the various devices served by the hydraulic circuit.

To the oil distribution system according to the present invention, therefore, has been added a hydraulic logic device, the shuttle of which is regulated by a very low-resistance (e.g. 1.5 bar) spring.

In this case, the logic device is therefore simply a valve, which allows oil to flow freely to the auxiliary distributors in all conditions in which the pump assembly is capable of simultaneously meeting the hydraulic power demand of all the (main and secondary) user devices, thus minimizing load losses in normal operating conditions of the hydraulic system. Only when the valve of the trailer hydraulic brake device is activated (this valve being a main priority valve), does the power supply to the (secondary priority) auxiliary distributors begin to fall, and this in a calibrated manner to ensure effective braking of the trailer (which, as stated, is assigned main priority).

It is therefore an object of the present invention to provide a system for distributing pressurized oil in a vehicle, in particular a farm tractor, designed to ensure priority of the user devices critical to the safety of the vehicle, while at the same time maintaining extremely low load and power losses in all "normal operating conditions".

"Normal operating conditions" is intended to mean those in which the pump assembly supplying the hydraulic circuit is capable of meeting the hydraulic power demand of all the user devices.

According to the present invention, there is provided a system as claimed in the accompanying Claims.

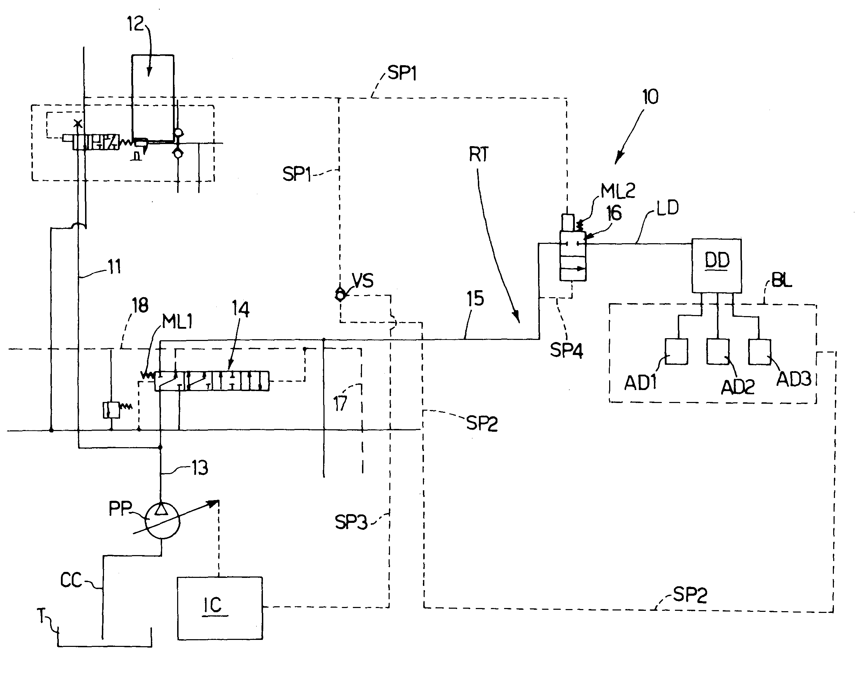

A non-limiting embodiment of the present invention will be described by way of example with reference to the attached drawing.

The attached drawing shows a schematic of a system 10 for distributing pressurized oil (hydraulic power) in a vehicle, in particular a farm tractor.

As explained in detail below, system 10 supplies hydraulic power to a number of user devices.

System 10 comprises a hydraulic network RT supplied with oil by a variable-displacement pump PP. Pump PP draws oil from a tank T along a conduit CC, and feeds it, along a conduit 11 forming part of network RT, to a main priority user device 12, e.g. a trailer hydraulic brake device.

In addition to conduit 11, network RT also comprises a conduit 13 supplying a pressure-reducing priority valve 14.

Valve 14 produces low pressure to supply oil to the low-pressure devices on the tractor (tractor hydraulic clutches, PTO coupling, etc.). A conduit 15, supplying a logic device 16, extends from valve 14.

A distribution line LD extends from logic device 16 to distribute pressurized oil to a distributor DD serving a number of auxiliary distributors AD1, AD2, AD3. Each auxiliary distributor AD1, AD2, AD3 is assigned secondary priority.

With the slides of valve 14 set as shown in the drawing, valve 14 stabilizes a predetermined oil pressure in conduits 17, 18, which, as stated, supply the low-pressure devices of the tractor (tractor hydraulic clutches, PTO coupling, etc.). The oil pressure in conduits 17, 18 obviously equals the force exerted by the spring ML1 of valve 14.

Moreover, valve 14 is designed to close, for example, in the event of "suction loads", which draw oil from, as opposed to being driven by, pump PP, thus preventing system 10 from being kept pressurized.

Hydraulic logic device 16 receives a control signal or so-called primary load sensing signal SP1 from user device 12.

A block BL, comprising all the auxiliary distributors AD1, AD2, AD3, generates a secondary load sensing signal SP2 corresponding to the highest of all the pressure signals generated by auxiliary distributors AD1, AD2, AD3.

Secondary load sensing signal SP2 is compared with primary load sensing signal SP1 by a selection valve VS; and the resulting signal SP3 is transmitted to a pressure and flow hydraulic compensator IC which controls variable-displacement pump PP.

As an alternative to the conventional all-hydraulic pump assembly control circuit shown in the drawing, the principle of the present invention also applies in the event the hydraulic user device network is controlled by a pump assembly electronic central control unit (not shown), to which pressure and flow demands are transmitted by each hydraulic user device in the form of electric signals.

Consequently, when (main priority) user device 12 is activated, control signal SP1 increases, thus also activating logic device 16 which, from the open position, begins choking oil flow to secondary priority user devices AD1, AD2, AD3.

For example, along conduit 15, displacement of the slide inside logic device 16 (when a control signal SP4 in opposition to the slide is lower than signal SP1 plus the load of spring ML2) increases the pressure upstream from logic device 16 to meet the demand of priority user device 12.

At the same time, signal SP3 is transmitted to pressure and flow hydraulic compensator IC, which induces pump PP to produce sufficient hydraulic power to supply priority user device 12.

If oil demand by one or more auxiliary distributors AD1, AD2, AD3 is less than what pump PP is capable of supplying, the pressure demanded by auxiliary distributors AD1, AD2, AD3 is guaranteed by the capacity of pump PP, and logic device 16 is fully open.

Conversely, if oil demand by one or more auxiliary distributors AD1, AD2, AD3 is more than what pump PP is capable of supplying, a pressure demand by priority user device 12 may not be satisfied. In which case, hydraulic logic device 16 closes partly to induce lamination of the oil to increase the pressure upstream from hydraulic logic device 16 and so meet the demand of priority user device 12.

For example, when priority user device 12 demands oil at 100-bar pressure, and none of auxiliary distributors AD1, AD2, AD3 is activated, hydraulic logic device 16 is "fully open" and the 100-bar pressure in conduits 13 and 11 is guaranteed by pump PP.

Similarly, if an auxiliary distributor AD1, AD2, AD3 demands oil at 120-bar pressure, while priority user device 12 continues to demand oil at 100-bar pressure, logic device 16 is fully open, and pump PP begins supplying oil at 120-bar pressure to meet the demand of auxiliary distributor AD1, AD2, AD3 and at the same time also supply priority user device 12 at 120-bar pressure, thus meeting the pressure demand of both.

Finally, if an auxiliary distributor AD1, AD2, AD3 demands oil at 50-bar pressure, and priority user device 12 at the usual 100-bar pressure, pump PP supplies the whole network RT with oil at 100-bar pressure, and hydraulic logic device 16 again remains fully open.

Hydraulic logic device 16 is only activated when priority user device 12 demands oil, and pump assembly PP is unable to meet the overall demand of hydraulic network RT as a whole.

Such is the case, for example, when one or more distributors AD1, AD2, AD3 demand a large amount of oil which pump PP is unable to supply. In this case, the pressure in conduit 15 cannot be maintained, and, if priority user device 12 has to be operated at a higher pressure than that in conduit 15, logic device 16 is activated to choke line LD to auxiliary distributors AD1, AD2, AD3 when the difference between the two control signals (SP1, SP4) connected in opposition to the shuttle of the logic device overcomes the setting of spring ML2.

The pressure upstream from logic device 16 therefore increases to meet the demand of priority user device 12.

The main advantage of system 10 according to the present invention can be summarized in no longer always having to overcome a number of "pressure heads" (thus resulting in considerable load loss) to supply "secondary priority" user devices, but in simply overcoming the very low resistance of a hydraulic logic device which remains fully open whenever the pump assembly is not saturated.

## Claims

1. A system (10) for distributing pressurized oil, in particular in a vehicle; the system (10) comprising an oil distribution network (RT), and a pump assembly (PP) for pumping oil to at least one priority user device (12) to which a relative "main priority" is assigned, and to at least one secondary user device (AD1, AD2, AD3) to which a relative "secondary priority" is assigned;
**characterized in that** the system comprises a hydraulic logic device (16); the device being operable to completely or partly close a feed conduit (15) to said hydraulic logic device (16) when oil is demanded by said at least one priority user device (12), and the pressure demand cannot be met on account of a simultaneous oil demand by said at least one secondary user device (AD1, AD2, AD3).

2. A system (10) according to claim 1, **characterized in that** said hydraulic logic device (16) is further operable to keep the feed conduit (15) fully open when said at least one priority user device (12) demands oil at a pressure lower than that of the oil demand by said at least one secondary user device (AD1, AD2, AD3).

3. A system (10) according to claim 1 or 2, **characterized in that** said hydraulic logic device (16) is further operable to keep said hydraulic logic device (16) fully open in all conditions in which said pump assembly (PP) is capable of ensuring the pressure and flow demands of all the user devices (12; AD1, AD2, AD3).

4. A system (10) according to any of the preceding claims **characterized in that** the slide of logic device (16) is balanced by a primary load sensing signal (SP1) from priority user device (12) and a control signal (SP2) from feed conduit (15) upstream of the logic device (16).

5. A system (10) according to any of the preceding claims, **characterized in that** it comprises a selection valve (VS) for comparing a primary load sensing signal (SP1) from priority user device (12) with a secondary load sensing signal (SP2) from said at least one secondary user device (AD1, AD2, AD3), the resulting signal (SP3) of said comparison being transmitted to a hydraulic compensator (IC) for controlling the output of said pump assembly (PP).
